# EUROPEAN PATENT SPECIFICATION

(11) **EP 4 224 066 B1**
(45) Date of publication and mention of the grant of the patent: **25.11.2026**
(21) Application number: 22154981.9
(22) Date of filing: 03.02.2022
(51) Int. Cl.: F24C 15/00, F24C 14/00

(54) **SYSTEM FOR PREPARING AND/OR HEATING A FOOD PRODUCT**
SYSTEM ZUR AUFBEREITUNG UND/ODER ERWÄRMUNG EINES LEBENSMITTELPRODUKTS
SYSTÈME DE PRÉPARATION ET/OU DE CHAUFFAGE D'UN PRODUIT ALIMENTAIRE

(43) Date of publication of application: 09.08.2023
(73) Proprietor: i-clean Technologies GmbH, 68766 Hockenheim (DE)
(72) Inventor: Töpfer, Rüdiger, 67273 Bobenheim am Berg (DE); Klingel, Alois, 68782 Brühl (DE); Koolen, Peter, 4617LE Bergen op Zoom (NL); Aichmalotidis, Achilles, 69118 Heidelberg (DE)
(74) Representative: Hörschler, Wolfram Johannes

(56) References cited:
- EP-A1- 1 978 309
- EP-A1- 3 848 440
- DE-A1- 102020 204 707
- US-A1- 2018 299 137

## Description

### Field of the invention

The present invention is related to a system for preparing and/or heating a food product in a cavity, said system comprising a self-cleaning device with a spraying device for spraying a cleaning fluid into the cavity, and a detergent holder. Further, the present invention is related to a method for cleaning a cavity of a system for preparing and/or heating a food product.

### Background of the invention

WO 2006/037 354 A1 is related to a method for dosing a solid detergent, detergent dispenser and use of a method and dispenser. The invention discloses a method for dosing a pre-determined quantity of a solid detergent from a solid detergent reservoir by dissolving some of the solid detergent in the reservoir in a rinsing liquid to form a detergent solution, comprising the following steps: a) Continuously or discontinuously feeding detergent solution generated at the detergent reservoir into a dissolving tank, b) measuring the amount of rinsing liquid supplied to form the detergent solution that is fed to the dissolving tank as well as any amount of rinsing liquid directly supplied to the dissolving tank, c) measuring the detergent concentration of the detergent solution in the dissolving tank, d) calculating the quantity of detergent in the detergent solution in the dissolving tank by multiplication of the results of the measurements in steps b) and c), e) feeding the amount of detergent solution representing the required quantity of detergent from the dissolving tank to a utilization point, preferably to equipment or system to be cleaned and/or disinfected. Further, this document relates to a corresponding detergent dispenser and preferred use of both.

US 2021/0095860 A1 is related to a validation of addition of cleaning chemistry to a self-cleaning oven. According to this disclosure, a system for controlling the initiation of a cleaning process is provided. The cleaning process is directed to an interior of an appliance and includes a detection sensor and a processor communicating with the detection sensor. The detection sensor may be configured to generate detection sensor data based on a sensed condition in a field of detection of the detection sensor, which may comprise one or more predetermined locations. The processor may control the initiation of an appliance cleaning process. The appliance cleaning process may comprise receiving detection sensor data representative of a first time and a second time, generating an initial condition based on the received detection sensor data representative of the first time, and generating a new condition based on the received detection sensor data representative of the second time. The processor may be additionally configured to compare the initial condition and the new condition and determine if cleaning product is present.

EP 3 507 547 B1 discloses a system comprising a self-cleaning rotisserie oven and a method for cleaning a self-cleaning rotisserie oven. A system is disclosed comprising a self-cleaning rotisserie oven, the self-cleaning rotisserie oven comprising a casing, an oven cavity with the casing for a food product, such as poultry, a heater for heating the food product and a self-cleaning device, the self-cleaning device comprising a spraying device for spraying a cleaning fluid in the oven cavity and a first outlet in a lower part of the oven cavity for discharging cleaning fluid. The system further comprises a cleaning fluid supply for supplying cleaning fluid to the spraying device and a discharge in communication with the oven cavity, for disposing of waste fluid, the self-cleaning rotisserie oven comprising a first detergent holder at a first height level and a second level and a second detergent holder at a second height level, the second detergent holder being provided at a higher level than the first detergent holder. The self-cleaning rotisserie oven comprises a control for controlling at least the self-cleaning device wherein the control is configured to perform the following steps: Filling the oven cavity with a first amount of cleaning fluid to at least the first height level and below the second height level, cleaning the oven cavity with the first amount of cleaning fluid and a first portion of detergent from the first detergent holder, discharging the first amount of cleaning fluid and the first portion of detergent from the oven cavity, filling the oven cavity with a second amount of cleaning fluid to at least a second height level, cleaning the oven cavity with the second amount of cleaning fluid and a second portion of detergent from the second detergent holder and discharging the second amount of cleaning fluid and the second portion of detergent from the oven cavity.

EP 3 848 440 A1 is related to a cleaning composition having at least one cleaning component, which is received in a cleaning device. The cleaning device is arranged within an interior of an oven. The cleaning composition comprises a cleaning block and further cleaning components, which by means of connecting and separation layers allow for a gravity-induced disconnecting of the cleaning component and/or which are provided with a soluble coating.

EP 1 978 309 A1 is related to a self-cleaning cooking appliance. A self-cleaning cooking apparatus includes a cooking chamber having a plurality of surfaces, a food preparation assembly configured to prepare food products within the cooking chamber, a water nozzle positioned to direct water into the cooking chamber, a holder configured to hold a detergent packet in a position configured to allow the water to dissolve the detergent from the detergent packet. The holder can be positioned in a drain tank or within the cooking chamber. The liquid within the drain tank can be recirculated from the drain tank to the nozzle.

DE 10 2020 204 707 A1 is related to a cleaning kit which is removably attached within an interior of a cooking device. A receiving device is disclosed to reversibly secure a cleaning unit with a cleaner composition.

US 2018/0299137 A1 is related to a cleaning agent for cleaning commercial cooking devices. A container with a solid cleaning agent, in particular a firm gel, is accommodated in a connection unit of the commercial cooking device. The solid cleaning agent is liquefied in the cleaning process in the container by means of heat and/or a solvent, preferably water and/or steam, in order to generate a liquefied cleaning agent. In addition, the invention relates to the use of container with a solid cleaning agent for cleaning a commercial cooking device. Finally, the invention relates to a corresponding container with a solid cleaning agent for cleaning commercial cooking devices.

### Disclosure of the invention

An object of the present invention is to facilitate cleaning processes, which are necessary from time to time to clean cavities of food preparing or food heating systems such as an oven or a rotisserie oven. According to the present invention a system is provided for preparing and/or heating a food product within a cavity, said system comprising a self-cleaning device with a spraying device for spraying a cleaning fluid into the cavity and a detergent holder, wherein the detergent holder is arranged on a framework or an accessing door of the cavity, a multi-component cartridge is received in the detergent holder, the detergent holder is maintained at an inclined angle towards a center of the cavity and the multi-component cartridge is being sprayed on by spray jets emerging from the spraying device in a continuous or discontinuous manner.

The system according to the present invention allows for a cleaning of a cavity with at least two cleaning steps depending on the number of different detergent compositions stored within the multi-component cartridge.

Advantageously, the system according to the present invention comprises the detergent holder, which is removably mounted on the framework or accessing door of the cavity, the detergent holder being made of a bent wire. Since the bent wire offers a very simply way of manufacturing the detergent holder, a variety of detergent holders can be manufactured easily. The bent wire further provides excellent heat conducting properties.

Further, the system according to an embodiment of the present invention comprises the detergent holder made of a bent wire, which defines a circular space with an opening for receiving the multi-component cartridge. This allows for a very simple mounting of the multi-component cartridge by clipping it into the circular space of the detergent holder and likewise removing it easily when the multi-component cartridge is exhausted, i. e. when it is emptied.

Furthermore, the system according to an embodiment of the present invention comprises the detergent holder having a zigzag line portion for hinging it into notches of a framework or an accessing door of the cavity. This allows an easing mounting and removal of the detergent-holder when not in use.

In a very advantageous manner, the system according to the present invention comprises the detergent-holder that keeps the multi-component cartridge in use in an inclined position directed towards the center of the cavity, the inclination angle being in the range of 7° to 13°.

The multi-component cartridge comprises a first chamber with a first volume for a first cleaning composition and at least one further, second chamber with a second volume for a second cleaning composition. The multi-component cartridge in this configuration allows for at least two different cleaning steps. If however a multi-component cartridge is used with more than two chambers, further cleaning steps can be performed within a cleaning cycle.

In the system according to an embodiment of the present invention, the first and second chambers of the multi-component cartridge each are sealed by a respective seal, which is used as initial seal.

The upper seal sealing the first chamber is substantially made of polyethylene glycol (PEG) and/or alkyl polyglycosides (APG) and/or mixtures of glycose, inducing a softening of the upper seal at a temperature between 47 °C and 49 °C and a melting of the upper seal at a temperature between 48 °C and 52 °C and/or completely dissolving the upper seal within less than 20 minutes.

Thus, by the material composition of the upper seal the temperature of opening, i. e. initiating a first cleaning cycle can be determined. Further, as long as said upper seal is in use, i. e. while the first chamber is emptied, the second chamber remains closed.

A further advantageous aspect of the system of an embodiment of the present invention is that the second seal seals the second chamber, the second seal being made of a hardened material, which is insoluble at a temperature below 50 °C. Thus, the second chamber and its content remains sealed as long as the first cleaning cycle is performed with the first cleaning composition contained in the first chamber, the seal of which has been opened.

Further, the second seal comprises a mixture of linear unbranched fatty acids, fatty acid amines, fatty acid esters, long-chain primary and polyhydric alcohols or carboxylic acids. For enhancement of thermal and mechanical stability, the second seal comprises cellulose fibers in an amount of 1 % to 3 %.

According to an embodiment of the system of the present invention, the second seal is made such that when sprayed on by a cleaning fluid directly or indirectly, having a temperature of about 60 °C +/- 2 °C, a melting process of the material of the second seal is initiated. Thus a retarded release of the second cleaning composition contained in the second chamber is performed when the melting process of the second seal has started.

A further advantageous aspect of an embodiment of the present invention is that the system is configured in such a way that upon contact of the second cleaning composition with the spraying jets after melting of the second seal an exothermic reaction is initiated resulting in an emptying of the second chamber at an enhanced temperature level between 80 °C and 90 °C.

According to an embodiment of the present invention, the multi-component cartridge of the system comprises at least a first cleaning composition and a second cleaning composition which are incompatible with respect to one another.

A further advantageous aspect of an embodiment of the present invention is that the multi-component cartridge comprises tapered portions next to the first and second chamber, respectively, to allow for a gravimetric emptying thereof after the seals have been removed.

The method of the present invention for cleaning a cavity of a system for preparing and/or heating a food product comprises the following steps:
a) a multi-component cartridge is arranged in an inclined position in a detergent holder within a cavity,
b) the multi-component cartridge comprises at least two chambers, each being sealed by separate seals, respectively, the materials of which melt at different temperatures,
c) the upper seal of the first chamber melts when being sprayed on by spraying jets having a temperature T1 between 45 °C and 49 °C, thus releasing a first cleaning composition into the cavity,
d) during step c) the seal of the second chamber remains sealed,
e) after step c), the cavity is rinsed by a rinsing fluid,
f) after heating the rinsing fluid contained in the cavity to a temperature T2 of about 60 °C, exceeding temperature T1, the second cleaning composition is released in the cavity delayed in time with respect to the first cleaning composition according to step c).

Furthermore, according to an embodiment of this method an exothermic reaction of the second cleaning composition after removal of the lower seal is initiated by an increasing temperature within the cavity, thereby bringing about a better cleaning performance and a better and faster release of the second cleaning composition, because the seal of the second chamber is melting faster and thus the chamber is opening faster. The accomplished faster release of the second cleaning composition leads to a better cleaning performance, since the length of the second cleaning cycle is extended.

A first aspect of the present method is that the second chamber of the multi-component cartridge is continuously rinsed by the spray jets so that the entire volume of the second cleaning composition of the second chamber is used for cleaning purposes.

### Advantages of the present invention

The present invention discloses a very simple detergent holder, which receives a multi-component cartridge. Depending on the number of cleaning steps to be performed the multi-component cartridge may comprise at least two chambers, each chamber containing a volume of a detergent, i. e. either a first cleaning composition or a second cleaning composition or even other cleaning compositions as for example enzymes or other materials with different properties.

The detergent holder can be very easily mounted on the framework or the accessing door of the cavity. In contrast to the solutions according to the prior art only one detergent holder can be used which is easily removable from the cavity during operation, i. e. while heating or preparing food.

According to the present invention a single cartridge is used having at least two different chambers, each of the chambers holding a different cleaning composition. In this way, one cartridge is used for implementing at least two cleaning cycles within a system for preparing and heating a food product. Still further, a time-delayed release of a second cleaning composition is achieved by means of the material composition of the second seal of the second chamber of the multi-component cartridge.

Another advantage of an embodiment of the present invention lies in the fact that in a multi-component cartridge two different cleaning compositions can be used, one of them initializing an exothermic reaction once the second seal of the second chamber containing the second cleaning composition is opened. The exothermic reaction increases the temperature to about 80 °C to 90 °C, whereby energy is saved, which otherwise would be necessary to heat the rinsing fluid to a temperature above the temperature T2 of the second cleaning cycle.

According to the present invention, the inclined position of the multi-component cartridge allows for a time-delayed emptying of each of the chambers of the multi-component cartridge storing non-compatible cleaning compositions. The first and second cleaning composition can be released independently and time-delayed during the first and second cleaning cycle, respectively.

In the present invention, the first cleaning composition advantageously allows for a pre-cleaning in order to degrade organic compounds, e. g. grease and oily substances, by a biochemical process, e. g. enzymatically, so that the fluid of the first cleaning cycle has a low viscosity and may hence be pumped or sprayed. Thus, even in case of a highly polluted cavity the fluid to be used, which preferably is water, has a relatively low volume and is highly energy-efficient.

Still further, by using the spray jets for the entire cleaning of the chambers of the multi-component cartridge it is avoided that residues of the cleaning compositions remain in the chambers, the chambers being continuously or discontinuously rinsed with water.

According to the present invention a substantially complete emptying of the cartridge is achieved. It is advantageous that the chemical components of the cleaning compositions are completely released so that the cartridge can be disposed with the household garbage, i. e. no particular handling due to hazardous substances is necessary. Often cartridges containing residues of cleaning compositions are disposed of illegally with the household garbage. Such cartridges containing residues of chemical substances can contaminate the soil, thus contributing to environmental pollution. Because the cartridge of the present invention is fully emptied by way of multiple rinsing, it does not constitute hazardous material and can be disposed of with the household garbage.

### Brief description of the drawings

The present invention is further described by the accompanying drawings, in which:
- Figure 1: shows a system for preparing and heating a food product within a cavity and a spray device thereof,
- Figure 2: shows a detergent holder,
- Figure 3: shows the detergent holder being arranged on a framework or accessing door of a cavity,
- Figure 4: shows a multi-component cartridge arranged in the detergent holder according to figure 3 arranged in an inclined position on the framework,
- Figure 5: shows a side view of the detergent holder arranged on a framework or an accessing door of the cavity in an inclined position, the multi-component cartridge being directed towards the center of the cavity to be cleaned and
- Figure 6: shows the detergent holder holding a multi-component cartridge being sprayed on by the spray jets.

### Embodiments of the invention

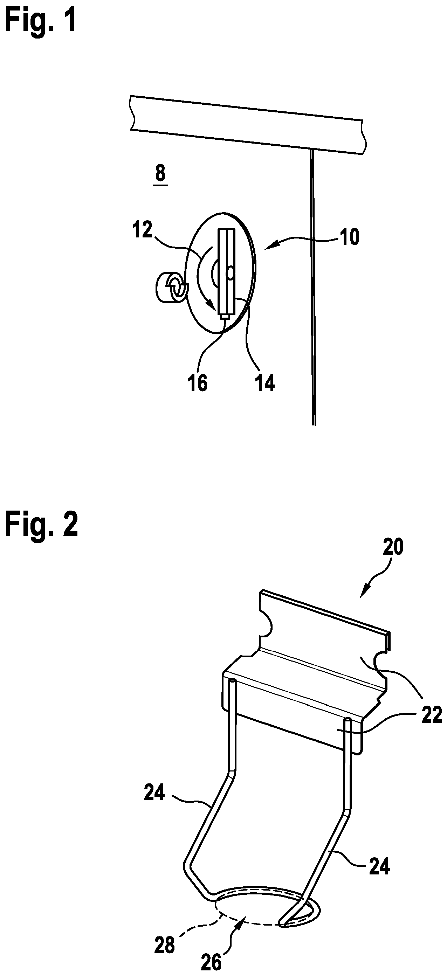

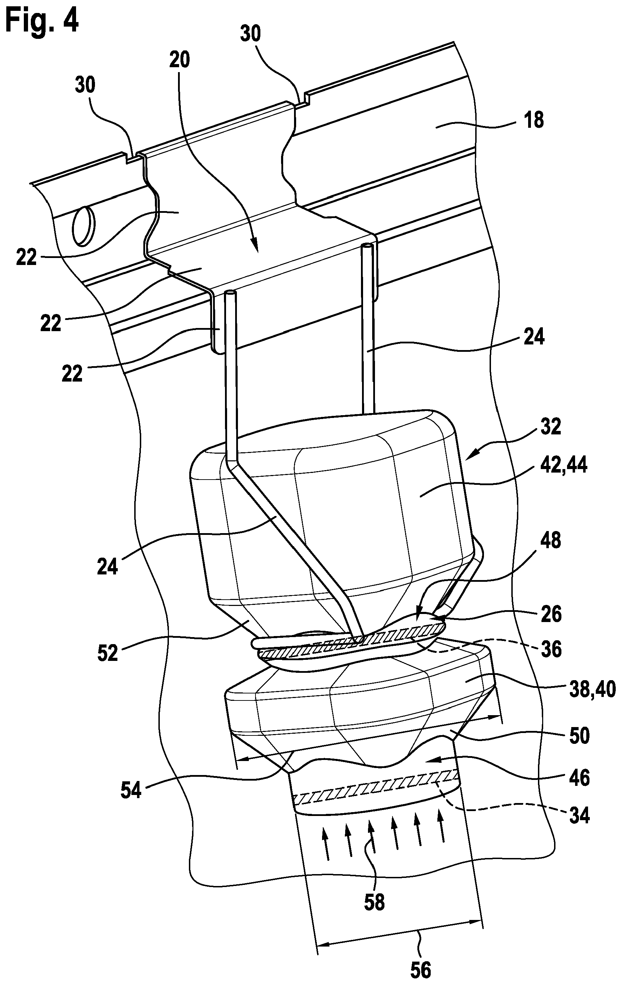

According to figure 1, the cavity 8 of a system for preparing a food product is schematically illustrated. In one of the limiting walls of the cavity 8 a spraying device 10 is arranged. The spraying device 10 comprises for example a spraying bar 14 rotating in a rotational direction 12 around an axis. The spraying bar 14 comprises at least one spraying nozzle 16, from which spray jets 58 emerge as schematically illustrated in figure 4.

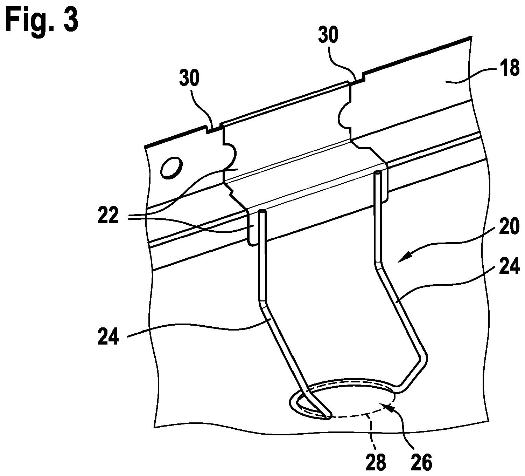

Figure 2 shows a cartridge-receiving unit 20, i. e. a detergent holder 24. The cartridge-receiving unit 20 comprises a portion having a zigzag line 22, the detergent holder 24 being made of a metallic material, particularly a bent wire. Said bent wire of the detergent holder 24 comprises a circular space 28, which is accessible by means of an opening 26. Upon arrangement of the detergent holder 24 on a framework or an accessing door 18 limiting the cavity 8, a multi-component cartridge 32 may be inserted in a lateral direction into the opening 26 of the circular space 28 as shown in figure 3.

In figure 3 it is shown that the detergent holder 24 made of a bent wire is mounted in notches 30 arranged of the framework or accessing door 18 of the cavity 8 of the system for heating or preparing a food product according to the present invention. As shown in figure 3 the detergent holder 24 is hinged in the notches 30 by its upper end part. Thus, the detergent holder 24 can very easily be removed or mounted on the framework or accessing door 18. Once the zigzag line portion 22 of the detergent holder 24 is removably mounted, the later operating position of a multi-component cartridge 32 according to figure 4 is predetermined. The inclination angle 60, i. e. the operating angle of the mounted multi-component cartridge 32 is defined by way of the bent wire of the detergent holder 24. In case the cleaning device of the cavity 8 is not used, the detergent holder 24, i. e. the cartridge-receiving unit 20 can be easily removed from the cavity 8 so that normal food preparing processes can be performed. Once a cleaning operation with different cleaning cycles is necessary, the cartridge-receiving unit 20 can be easily mounted as shown in figure 3.

The perspective view according to figure 4 shows the multi-component cartridge 32 engaged in the cartridge-receiving unit 20, i. e. the detergent holder 24.

In figure 4 the multi-component cartridge 32 comprises a first chamber 38 at its lower end, said first chamber 38 defining a first volume 40 for a first cleaning composition 46. Further, the multi-component cartridge 32 comprises a second chamber 42 having a second volume 44 holding a second cleaning composition 48. The first cleaning composition 46 and the second cleaning composition 48 are incompatible with respect to one another. According to an embodiment of the present invention, a first chamber 38 is sealed by an upper seal 34, whereas the second chamber 42 is sealed by a lower seal 36. Thus, both cleaning compositions 46 and 48 are initially separated from one another.

Still further, both chambers 38, 42 each comprise a tapered portion, i. e. the first tapered portion 50 of the first chamber 38 and the second tapered portion 52 of the second chamber 42. At the bottom of the tapered portions 50, 52, respectively, the chambers 38, 42 are sealed by the seals 34, 36, respectively.

The first and second tapered portions 50, 52 each have a second diameter 56, which is smaller than a first diameter 54 of the chambers 38, 42, respectively.

As schematically disclosed in figure 4, the upper seal 34 of the multi-component cartridge 32 is sprayed on by spray jets 58.

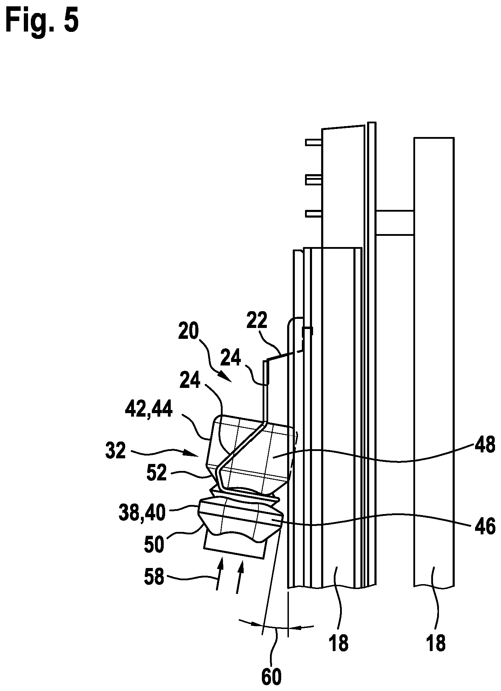

An angle 60 defining the inclined position of the multi-component cartridge arranged in the detergent holder 24 is best shown in the side view according to figure 5.

According to an embodiment of the present invention the bent wire of the detergent holder 24 is made of thin metal material which allows for a favorable heat transfer of the cleaning fluid to the multi-component cartridge 32. This accelerates the reaching of a melting temperature T1, T2 of the seals 34, 36 sealing the first chamber 38 and the second chamber 42, respectively.

The lower seal 36 sealing the second chamber 42 of the multi-component cartridge 32 is made in such a way that the lower seal 36 during the first cleaning cycle with a temperature T1 of the cleaning fluid between 47 °C and 49 °C maintains its sealing position so that the second cleaning composition 48 of the second chamber 42 is protected against the entry of fluid during the first cleaning cycle so as to prevent a too early entry of the second cleaning composition 48 into the cavity 8.

As soon as the first cleaning cycle has ended, used cleaning fluid is drained from the cavity 8 and the cavity 8 is rinsed. After rinsing, the cavity 8 is closed again and filled for a second time with a defined volume of water. Subsequently, the fluid contained in the cavity 8 is heated from temperature T1 used in the first cleaning cycle up to a temperature T2, which is necessary for the second cleaning cycle amounting to about 60 °C +/- 2 °C. After the temperature T2 has been reached, the lower seal 36 begins to melt so that the second cleaning composition 48 of the second chamber 42 enters the cavity 8 and the fluid volume contained therein. Once the lower seal 36 has opened an exothermic reaction of the second cleaning composition 48 is initialized so that a complete emptying of the second chamber 42 can be realized. During the emptying of the second chamber 42 the interior of the second chamber 42 is continuously sprayed with water in order to remove substantially all of the residues of the second cleaning composition 48 of the multi-component cartridge 32. Due to the shape of the detergent holder 24 for receiving the multi-component cartridge 32 a positioning of the multi-component cartridge 32 is realized at an angle of 7° to 13° pointing toward the center of the cavity 8 to be cleaned. Thus it is accomplished that the cleaning compositions 46, 48, e. g. the first and second volumes 40, 44, respectively, contained in the chambers 38, 42, are released time-delayed so that both cleaning compositions 46, 48 are separated from each other and do not enter the cavity 8 at the same time. A further feature of an embodiment of the present invention is that the cleaning compositions 46, 48 stored in the chambers 38, 42 of the multi-component cartridge 32 are two incompatible mixtures with different cleaning properties during the cleaning cycle.

The first cleaning composition 46 stored within the first volume 40 of the first chamber 38 is used for pre-cleaning of about 60 % to 99 % of the dirt and has the primary object to remove fatty and oily pollutions by means of a biochemical process so that the cleaning fluid used during the first cleaning cycle, maintains a low viscosity, thus being sprayable. Thereby, despite a high amount of dirt, the fluid volume, preferably water, is relatively low, which in turn saves energy.

In the multi-component cartridge 32 both chambers 38 and 42 are provided with a first tapered portion 50 and a second tapered portion 52, respectively. This is advantageous, because the cleaning compositions 46, 48 stored within the chambers 38, 42, respectively, are released gravimetrically. Residues of the cleaning compositions 46, 48 are removed from the chambers 38, 42 by continuous rinsing of the interior by the spray jets 58. Thus, at the end of the cleaning cycles performed at temperatures T1 and T2, respectively, the multi-component cartridge 32 is fully emptied so that no special waste treating becomes necessary.

Furthermore, it deserves mentioning that the materials of which the upper seal 34 and the lower seal 36 are made, differ from one another. Whereas the upper seal 34 is made of a temperature-sensitive and water-soluble material and substantially made of polyethylene glycols (PEG) and/or alkyl polyglycols (APG) and/or glycose mixtures which soften at a temperature between 47 °C and 48 °C, melt between 48 °C and 52 °C and dissolve within less than 20 minutes, the lower seal 36 on the other hand has a different material composition. The lower seal 36 sealing the second chamber 42 during the first cleaning cycle makes sure that at a temperature T1 of less than 50 °C the second chamber 42 remains closed during the first cleaning cycle, thus preventing an early release of the second cleaning composition 48 out of the second chamber 42. The lower seal 36 is substantially made of a mixture of linear unbranched fatty acids, fatty acid amines, fatty acid esters, long-chain primary and polyhydric alcohols or carboxylic acids. For reasons of thermal and mechanical stabilizing of the lower seal 36 during the first cleaning cycle the composition of the material of the lower seal 36 comprises 1 % to 3 % of cellulose fiber material.

Still further, the lower seal 36 has melting properties such that it begins to melt during the second cycle as soon as it is directly or indirectly sprayed on with a cleaning fluid having a temperature of 60 °C +/- 2 °C. Upon contact of the lower seal 36 with the second cleaning composition 48 and the spray jets 58 an exothermic reaction is initialized which results in a temperature increase to from 80 °C to 90 °C so that the melting of the lower seal 36 is accelerated. Thus, the release of the second cleaning composition 48 is enhanced and has a duration of about less than 10 minutes. Small residues of the second cleaning composition 48 within the second chamber 42 will be rinsed out by means of continuously spraying on by operation of the spray jets 58 into the interior of the multi-component cartridge 32 until the second chamber 42 is completely empty.

As a further advantageous embodiment the multi-component cartridge 32 can be made as a foiled tab, the foil being water-soluble.

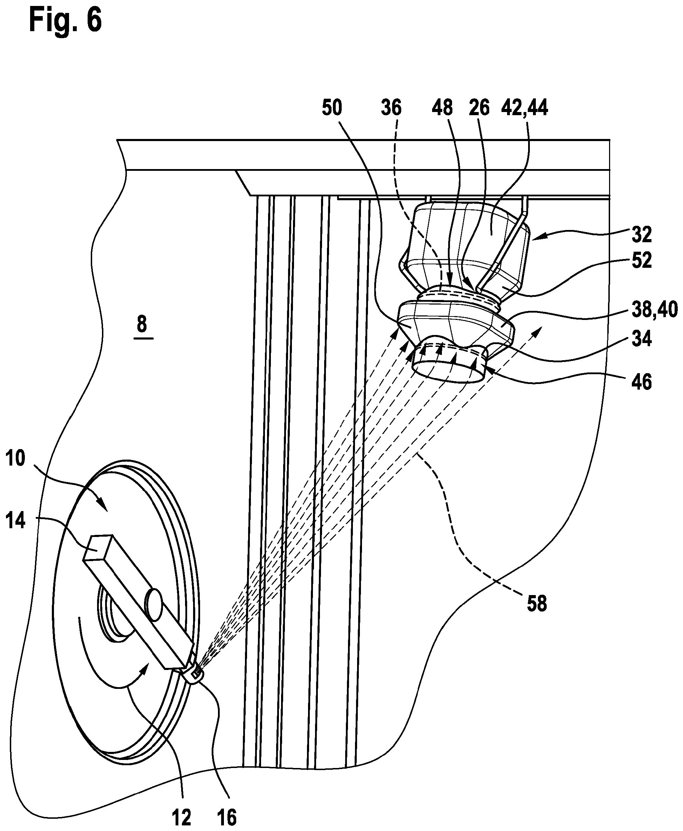

Figure 6 shows a perspective view of the cavity 8 of the cleaning device. The cleaning device comprises a spraying device 10, which comprises a spraying bar 14 moving in rotational direction 12. At the bottom of the spraying bar 14 at least one spraying nozzle 16 is arranged emitting a number of spray jets 58. It can be derived from figure 6 that the spray jets 58 emerging from the spraying nozzle 16 are directed to the bottom of the multi-component cartridge 32, which is integrated into the cartridge-receiving unit 20, i. e. the detergent holder 24. The multi-component cartridge 32 comprises the first chamber 38 containing the first volume 40 of the first cleaning composition 46 and the second chamber 42 containing the second volume 44 comprising the second cleaning composition 48. The spray jets 58 first contact the upper seal 34 sealing the first chamber 38. Once the upper seal 34 has melted, the first cleaning composition 46 is being released into the cavity 8.

Upon further action of the spray jets 58 being heated up to a second temperature T2 exceeding the first temperature T1 used in the first cleaning cycle, the upper seal 34 is being melted so that the second cleaning composition 48 contained in the second volume 44 contained in the second chamber 42 is being released into the cavity 8 to perform the second cleaning cycle. The multi-component cartridge 32 as shown in figure 6 arranged in the detergent holder 24 further comprises the first and second tapered portions 50, 52 already described in connection with figure 4.

The invention is not limited to the embodiments described herein and the aspects highlighted. Rather, within the scope indicated by the claims, a multitude of variations is possible with respect to the skilled in the art.

### Reference Numerals

- 8: Cavity
- 10: Spraying device
- 12: Rotational direction
- 14: Spraying bar
- 16: Spraying nozzle
- 18: Framework / accessing door
- 20: Cartridge-receiving unit
- 22: Zigzag line portion
- 24: Detergent holder
- 26: Opening
- 28: Circular space
- 30: Recess / notch
- 32: Multiple-component cartridge
- 34: Upper seal
- 36: Lower seal
- 38: First chamber
- 40: First volume
- 42: Second chamber
- 44: Second volume
- 46: First cleaning composition
- 48: Second cleaning composition
- 50: First tapered portion
- 52: Second tapered portion
- 54: First diameter portion
- 56: Second diameter portion
- 58: Spray jets
- 60: Inclination angle

## Claims

1. System for preparing and/or heating a food product within a cavity (8), said system comprising a self-cleaning device with a spraying device (10) for spraying a cleaning fluid into the cavity (8), and a detergent holder (24), wherein the detergent holder (24) is arranged on a framework or an accessing door (18) of the cavity (8), a multi-component cartridge (32) being received in the detergent holder (24), wherein the multi-component cartridge (32) comprises at its lower end a first chamber (38) holding a first volume (40) of a first cleaning composition (46) and at least a second chamber (42) holding a second volume (44) of a second cleaning composition (48), **characterized in that** the detergent holder (24) is held in an inclined position at an angle (60) towards a center of the cavity (8), the angle (60) being the operating angle of the mounted multi-component cartridge (32) defined by way of the bent wire of the detergent holder (24), the multi-component cartridge (32) being sprayed on by spray jets (58) emerging from the spraying device (10) in a continuous or discontinuous manner.

2. System according to claim 1, wherein the detergent holder (24) is removably mounted on the framework or accessing door (18) of the cavity (8), the detergent holder (24) being made of a bent wire.

3. System according to claim 1, wherein the detergent holder (24) made of a bent wire defines a circular space (28) having an opening (26) for receiving the multi-component cartridge (32).

4. System according to claims 1 to 3, wherein the detergent holder (24) comprises a zigzag line shaped portion (22) hinged in notches (30) of the framework or accessing door (18) of the cavity (8).

5. System according to claims 1 to 4, wherein the angle (60) defining the inclined position of the multi-component cartridge (32) towards the center of the cavity (8) preferably is between 7° to 13°.

6. System according to claim 1, wherein each of the at least first and second chambers (38, 42) is secured by an initial seal (34, 36), respectively.

7. System according to claim 1, wherein a first seal (34) sealing the first chamber (38) is made substantially of polyethylene glycols (PEG) and/or alkyl polyglycosides (APG) and/or mixtures of glycose inducing a softening of the first seal (34) at between 47 °C and 50 °C, and a melting of the first seal (34) at between 48 °C and 52 °C and/or a time of complete dissolution of the upper seal (34) of less than 20 minutes.

8. System according to claim 1, wherein a second seal (36) sealing the second chamber (42) is made of a hardened material being non-soluble at a temperature below 50 °C.

9. System according to claim 8, wherein the second seal (36) comprises a mixture of linear unbranched fatty acids, fatty acid amines, fatty acid esters, long-chain primary and polyhydric alcohols or carboxylic acids.

10. System according to claim 8, wherein the second seal (36) for enhancement of thermal and mechanical stability comprises 1 % to 3 % cellulose fibers.

11. System according to claim 8, wherein the second seal (36) is made such that when sprayed on by a cleaning fluid directly or indirectly, having a temperature of about 60 °C +/- 2 °C, a melting process of the second seal (36) is initiated.

12. System according to claims 1 to 11, wherein upon contact of the second cleaning composition (48) with the spraying jets (58) after melting of the second seal (36) an exothermic reaction is initiated resulting in an emptying of the second chamber (42).

13. System according to claims 1 to 12, wherein the multi-component cartridge (32) comprises at least a first cleaning composition (46) and a second cleaning composition (48), respectively, which are incompatible with respect to one another.

14. System according to claims 1 to 13, wherein the multi-component cartridge (32) comprises tapered portions (50, 52) next to the first and second chamber (38, 42), respectively, to allow for a gravimetric emptying thereof after the first and second seals (34, 36) have been removed.

15. Method for cleaning a cavity (8) of a system for preparing and/or heating a food product, wherein
a) a multi-component cartridge (32) is arranged in an inclined position in a detergent holder (24) within a cavity (8),
b) said multi-component cartridge (32) comprising at least two chambers (38, 42) each being sealed by separate seals (34, 36), respectively, the materials of which melt at different temperatures,
c) a first seal (34) of the first chamber (38) melts when being sprayed on by spraying jets (58) and at a temperature T1 between 45 °C and 49 °C, thus releasing a first cleaning composition (46) into the cavity (8),
d) while a second seal (36) of the second chamber (42) remains sealed,
e) after step c) the cavity (8) is rinsed,
f) after heating the rinsing fluid contained in the cavity (8) the rinsing fluid is heated to a temperature T2 of about 60 °C, exceeding temperature T1 so that the second seal (36) melts, and the seconding cleaning composition (48) is released into the cavity (8) delayed in time with respect to the first cleaning composition (46) according to method step c).

16. Method according to claim 15, wherein according to f) an exothermic reaction of the second cleaning composition (48) after removal of the second seal (36) is initiated.

17. Method according to claim 15, wherein the second chamber (42) of the multi-component cartridge (32) is continuously rinsed by the spray jets (58).

## Patentansprüche

1. System zum Aufbereiten und/oder Erwärmen eines Lebensmittelprodukts innerhalb eines Hohlraums (8), wobei das System eine Selbstreinigungsvorrichtung mit einer Sprühvorrichtung (10) zum Einsprühen einer Reinigungsflüssigkeit in den Hohlraum (8) und einen Detergenshalter (24) umfasst, wobei der Detergenshalter (24) an einem Rahmen oder einer Zugangstür (18) des Hohlraums (8) angeordnet ist, wobei eine Mehrkomponentenkartusche (32) in dem Detergenshalter (24) aufgenommen ist, wobei die Mehrkomponentenkartusche (32) an ihrem unteren Ende eine erste Kammer (38), die ein erstes Volumen (40) einer ersten Reinigungszusammensetzung (46) hält, und wenigstens eine zweite Kammer (42), die ein zweites Volumen (44) einer zweiten Reinigungszusammensetzung (48) hält, umfasst, **dadurch gekennzeichnet, dass** der Detergenshalter (24) in einer geneigten Position in einem Winkel (60) zu einer Mitte des Hohlraums (8) gehalten wird, der Winkel (60) der über den gebogenen Draht des Detergenshalters (24) definierte Arbeitswinkel der montierten Mehrkomponentenkartusche (32) ist, die Mehrkomponentenkartusche (32) durch kontinuierlich oder diskontinuierlich aus der Sprühvorrichtung (10) austretende Sprühstrahlen (58) aufgesprüht wird.

2. System nach Anspruch 1, wobei der Detergenshalter (24) abnehmbar an dem Rahmen oder der Zugangstür (18) des Hohlraums (8) montiert ist, wobei der Detergenshalter (24) aus einem gebogenen Draht besteht.

3. System nach Anspruch 1, wobei der Detergenshalter (24), der aus einem gebogenen Draht besteht, einen kreisförmigen Raum (28) definiert, der eine Öffnung (26) zum Aufnehmen der Mehrkomponentenkartusche (32) aufweist.

4. System nach Ansprüchen 1 bis 3, wobei der Detergenshalter (24) einen Zick-Zack-linienförmigen Abschnitt (22) umfasst, der in Kerben (30) des Rahmens oder der Zugangstür (18) des Hohlraums (8) angelenkt ist.

5. System nach Ansprüchen 1 bis 4, wobei der Winkel (60), der die geneigte Position der Mehrkomponentenkartusche (32) in Richtung zu der Mitte des Hohlraums (8) definiert, vorzugsweise zwischen 7° und 13° beträgt.

6. System nach Anspruch 1, wobei jede von der wenigstens ersten und zweiten Kammer (38, 42) durch eine anfängliche Dichtung (34, 36) gesichert ist.

7. System nach Anspruch 1, wobei eine erste Dichtung (34), die die erste Kammer (38) abdichtet, im Wesentlichen aus Polyethylenglykolen (PEG) und/oder Alkylpolyglykosiden (APG) und/oder Gemischen von Glykose besteht, die eine Erweichung der ersten Dichtung (34) bei zwischen 47 °C und 50 °C und ein Schmelzen der ersten Dichtung (34) bei zwischen 48 °C und 52 °C und/oder eine Zeit zur vollständigen Auflösung der oberen Dichtung (34) von weniger als 20 Minuten induzieren.

8. System nach Anspruch 1, wobei eine zweite Dichtung (36), die die zweite Kammer (42) abdichtet, aus einem gehärteten Material besteht, das bei einer Temperatur unter 50 °C unlöslich ist.

9. System nach Anspruch 8, wobei die zweite Dichtung (36) ein Gemisch aus linearen unverzweigten Fettsäuren, Fettsäureaminen, Fettsäureestern, langkettigen primären und mehrwertigen Alkoholen oder Carbonsäuren umfasst.

10. System nach Anspruch 8, wobei die zweite Dichtung (36) zur Verbesserung der thermischen und mechanischen Stabilität 1 % bis 3 % Cellulosefasern umfasst.

11. System nach Anspruch 8, wobei die zweite Dichtung (36) so hergestellt ist, dass bei direktem oder indirektem Aufsprühen eines Reinigungsfluids mit einer Temperatur von etwa 60 °C +/- 2 °C ein Schmelzvorgang der zweiten Dichtung (36) eingeleitet wird.

12. System nach Ansprüchen 1 bis 11, wobei bei Kontakt der zweiten Reinigungszusammensetzung (48) mit den Sprühstrahlen (58) nach Schmelzen der zweiten Dichtung (36) eine exotherme Reaktion eingeleitet wird, die zu einer Entleerung der zweiten Kammer (42) führt.

13. System nach Ansprüchen 1 bis 12, wobei die Mehrkomponentenkartusche (32) wenigstens eine erste Reinigungszusammensetzung (46) bzw. eine zweite Reinigungszusammensetzung (48) umfasst, die inkompatibel miteinander sind.

14. System nach Ansprüchen 1 bis 13, wobei die Mehrkomponentenkartusche (32) verjüngte Abschnitte (50, 52) neben der ersten bzw. zweiten Kammer (38, 42) umfasst, um gravimetrische Entleerung davon zu ermöglichen, nachdem die erste und die zweite Dichtung (34, 36) entfernt worden sind.

15. Verfahren zur Reinigung eines Hohlraums (8) eines Systems zur Zubereitung und/oder Erwärmung eines Lebensmittelprodukts, wobei
a) eine Mehrkomponentenkartusche (32) in einer geneigten Position in einem Detergenshalter (24) innerhalb eines Hohlraums (8) angeordnet ist,
b) wobei die Mehrkomponentenkartusche (32) wenigstens zwei Kammern (38, 42) umfasst, die jeweils durch gesonderte Dichtungen (34, 36) abgedichtet sind, deren Materialien bei unterschiedlichen Temperaturen schmelzen,
c) eine erste Dichtung (34) der ersten Kammer (38) schmilzt, wenn sie durch Sprühstrahlen (58) und bei einer Temperatur T1 zwischen 45 °C und 49 °C besprüht wird, wodurch eine erste Reinigungszusammensetzung (46) in den Hohlraum (8) freigesetzt wird,
d) während eine zweite Dichtung (36) der zweiten Kammer (42) dicht bleibt,
e) nach Schritt c) der Hohlraum (8) gespült wird,
f) nach Erwärmen der in dem Hohlraum (8) enthaltenen Spülflüssigkeit die Spülflüssigkeit auf eine Temperatur T2 von etwa 60 °C, die die Temperatur T1 übersteigt, erhitzt wird, so dass die zweite Dichtung (36) schmilzt und die zweite Reinigungszusammensetzung (48) zeitlich verzögert gegenüber der ersten Reinigungszusammensetzung (46) gemäß Verfahrensschritt c) in den Hohlraum (8) freigesetzt wird.

16. Verfahren nach Anspruch 15, wobei gemäß f) eine exotherme Reaktion der zweiten Reinigungszusammensetzung (48) nach Entfernen der zweiten Dichtung (36) ausgelöst wird.

17. Verfahren nach Anspruch 15, wobei die zweite Kammer (42) der Mehrkomponentenkartusche (32) durch die Sprühstrahlen (58) kontinuierlich gespült wird.

## Revendications

1. Système de préparation et/ou de chauffage d'un produit alimentaire au sein d'une cavité (8), ledit système comprenant un dispositif autonettoyant avec un dispositif de pulvérisation (10) pour pulvériser un fluide de nettoyage dans la cavité (8), et un support de détergent (24), le support de détergent (24) étant agencé sur un cadre ou une porte d'accès (18) de la cavité (8), une cartouche à composants multiples (32) étant reçue dans le support de détergent (24), la cartouche à composants multiples (32) comprenant à son extrémité inférieure une première chambre (38) recevant un premier volume (40) d'une première composition de nettoyage (46) et au moins une deuxième chambre (42) recevant un deuxième volume (44) d'une deuxième composition de nettoyage (48), **caractérisé en ce que** le support de détergent (24) est maintenu dans une position inclinée selon un angle (60) vers un centre de la cavité (8), l'angle (60) étant l'angle de fonctionnement de la cartouche à composants multiples (32) montée, défini par le fil courbé du support de détergent (24), la cartouche à composants multiples (32) étant pulvérisée par des jets de pulvérisation (58) sortant du dispositif de pulvérisation (10) de manière continue ou discontinue.

2. Système selon la revendication 1, le support de détergent (24) étant monté de manière amovible sur le cadre ou la porte d'accès (18) de la cavité (8), le support de détergent (24) étant constitué d'un fil courbé.

3. Système selon la revendication 1, le support de détergent (24) constitué d'un fil courbé définissant un espace circulaire (28) ayant une ouverture (26) pour recevoir la cartouche à composants multiples (32).

4. Système selon les revendications 1 à 3, le support de détergent (24) comprenant une partie en forme de ligne en zigzag (22) articulée dans des encoches (30) du cadre ou de la porte d'accès (18) de la cavité (8).

5. Système selon les revendications 1 à 4, l'angle (60) définissant la position inclinée de la cartouche à composants multiples (32) vers le centre de la cavité (8) de préférence compris entre 7° et 13°.

6. Système selon la revendication 1, chacune des au moins première et deuxième chambres (38, 42) étant fixée respectivement par un joint d'étanchéité initial (34, 36).

7. Système selon la revendication 1, un premier joint d'étanchéité (34) qui scelle la première chambre (38) étant réalisé essentiellement en polyéthylèneglycols (PEG) et/ou alkyl polyglycosides (APG) et/ou des mélanges de glycose induisant un ramollissement du premier joint d'étanchéité (34) entre 47 °C et 50 °C, et une fusion du premier joint d'étanchéité (34) entre 48 °C et 52 °C et/ou un temps de dissolution complète du joint d'étanchéité supérieur (34) inférieur à 20 minutes.

8. Système selon la revendication 1, un deuxième joint d'étanchéité (36) qui scelle la deuxième chambre (42) étant réalisé dans un matériau durci qui est non soluble à une température inférieure à 50 °C.

9. Système selon la revendication 8, le deuxième joint d'étanchéité (36) comprenant un mélange d'acides gras linéaires non ramifiés, d'amines d'acides gras, d'esters d'acides gras, d'alcools primaires et polyhydriques à longue chaîne ou d'acides carboxyliques.

10. Système selon la revendication 8, le deuxième joint d'étanchéité (36) destiné à améliorer la stabilité thermique et mécanique comprenant de 1 % à 3 % de fibres de cellulose.

11. Système selon la revendication 8, le deuxième joint d'étanchéité (36) étant réalisé de telle sorte que lorsqu'il est pulvérisé directement ou indirectement par un fluide de nettoyage ayant une température d'environ 60 °C +/- 2 °C, un processus de fusion du deuxième joint d'étanchéité (36) étant amorcé.

12. Système selon les revendications 1 à 11, lors du contact de la deuxième composition de nettoyage (48) avec les jets de pulvérisation (58) après fusion du deuxième joint d'étanchéité (36), une réaction exothermique étant déclenchée, entraînant un vidage de la deuxième chambre (42).

13. Système selon les revendications 1 à 12, la cartouche à composants multiples (32) comprenant au moins une première composition de nettoyage (46) et une deuxième composition de nettoyage (48), respectivement, qui sont incompatibles l'une par rapport à l'autre.

14. Système selon les revendications 1 à 13, la cartouche à composants multiples (32) comprenant des parties effilées (50, 52) à côté des première et deuxième chambres (38, 42), respectivement, pour permettre un vidage gravimétrique de celle-ci après que les premier et deuxième joints d'étanchéité (34, 36) ont été retirés.

15. Procédé de nettoyage d'une cavité (8) d'un système de préparation et/ou de chauffage d'un produit alimentaire
a) une cartouche à composants multiples (32) étant agencée en position inclinée dans un support de détergent (24) à l'intérieur d'une cavité (8),
b) ladite cartouche à composants multiples (32) comprenant au moins deux chambres (38, 42) chacune étant scellée par des joints d'étanchéité distincts (34, 36) dont les matériaux fondent à des températures différentes,
c) un premier joint d'étanchéité (34) de la première chambre (38) fondant lorsqu'il est projeté par des jets de pulvérisation (58) et à une température T1 comprise entre 45 °C et 49 °C, libérant ainsi une première composition de nettoyage (46) dans la cavité (8),
d) tandis qu'un deuxième joint d'étanchéité (36) de la deuxième chambre (42) reste scellé,
e) après l'étape c) la cavité (8) étant rincé,
f) après chauffage du fluide de rinçage contenu dans la cavité (8), le fluide de rinçage étant chauffé à une température T2 d'environ 60 °C, dépassant la température T1 afin que le deuxième joint d'étanchéité (36) fonde, et la deuxième composition de nettoyage (48) étant libérée dans la cavité (8) de manière retardée par rapport à la première composition de nettoyage (46) selon l'étape c).

16. Procédé selon la revendication 15, selon f) une réaction exothermique de la deuxième composition de nettoyage (48) étant déclenchée après le retrait du deuxième joint d'étanchéité (36).

17. Procédé selon la revendication 15, la deuxième chambre (42) de la cartouche à composants multiples (32) étant rincée en continu par les jets de pulvérisation (58).
